# EUROPEAN PATENT SPECIFICATION

(11) **EP 0 876 085 B1**
(45) Date of publication and mention of the grant of the patent: **25.02.2004**
(21) Application number: 98201320.3
(22) Date of filing: 24.04.1998
(51) Int. Cl.: H05B 33/08

(54) **A low tension lighting device**
Niederspannungsbeleuchtungsvorrichung
Dispositif d'éclairage pour basses tensions

(30) Priority: 24.04.1997 IT MO970073
(43) Date of publication of application: 04.11.1998
(73) Proprietor: Incerti & Simonini di Incerti Edda & C. S.n.c., 42026 Canossa (Reggio Emilia) (IT)
(72) Inventor: Incerti, Edda, 42034 Casina(Reggio Emilia) (IT)
(74) Representative: Arena, Giovanni

(56) References cited:
- WO-A-96/02970
- DE-A- 2 925 692
- DE-A- 3 832 109
- FR-A- 2 586 844
- FR-A- 2 628 823
- US-A- 4 211 955
- US-A- 4 675 575
- US-A- 5 325 271
- US-A- 5 442 258
- US-A- 5 495 147

## Description

The invention relates to a low-tension illumination device.

Specifically, though not exclusively, it is useful in cemetery-type or other monument lighting, where illumination has a symbolic value and should be able to continue at length but with low consumption.

Various types of incandescent lamps are already in use for this type of application, all of which have limits and drawbacks.

Firstly, they are of limited duration, in the region of a few thousand hours, and give a fairly low-level performance.

Secondly, they are of poor reliability, especially due to the delicate nature of the filament.

*Some types of lamps where the lighting is made by LEDs are shown in the patent documents US 5 442 258, FR 2 628 823, US 4 211 955 and DE 2925692; however these lamps do not have the appearance of traditional incandescent lamps.*

The main aim of the present invention is to provide an illumination device which is able to obviate the limits and drawbacks in the prior art.

An advantage of the present invention is to provide a device which can substitute those lamps currently in use without having substantially to modify the lampholders and illumination plants in use in cemeteries.

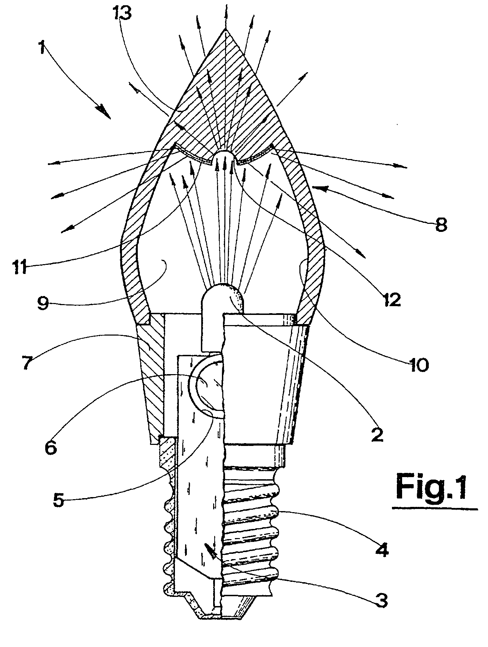

Further advantages are that consumption is relatively low, duration and efficiency and reliability are much improved, and there is a significant energy saving with respect to the amount of light emitted. These aims and advantages are all attained by the invention as it is characterised in the claims that follow. Further characteristics and advantages of the present invention will better emerge from the detailed description that follows of a preferred embodiment of the invention, illustrated by way of example in the accompanying figure figure 1 shows a schematic section of the device.

With reference to the above-mentioned figure, 1 denotes in its entirety a low-tension illumination device comprising a light source composed of one or more LEDs 2, a control circuit 3 which controls the LED 2, and a coupling element, in the example a screw base 4, with which the device can be inserted in a lamp socket of known type and not illustrated.

The control circuit 3 of the LED 2 is a printed circuit, having a main body which is substantially rectangular, and which is conformed and of such dimensions as to be insertable in the screw base 4, which reduces the overall mass of the device 1. The printed circuit 3 further exhibits, superiorly, a hollow seat 5 for housing an electrolytic condenser 6, which condenser 6 is arranged with its geometric axis perpendicular to the printed circuit 3. The upper end of the printed circuit also functions as a support for the LED 2.

An adaptor ring 7 is constrained by its lower end to the upper end of the screw base 4. The upper part of the printed circuit 3 is housed internally of the adaptor ring 7. The adaptor ring 7 is made of white plastic (for example, ABS or nylon) and exhibits a surface finishing such as to diffuse the light evenly. With the same aim of diffusing the light evenly, the printed circuit 3 is fixed using white epoxy resin, which doubles as waterproofing.

A body 8 is constrained to the upper end of the ring 7 to protect the LED 2 and to diffuse the light emitted by the LED 2 evenly - since the light emitted is, in fact, emitted in a preferred direction. The body 8 is effectively a diffusion filter, thanks to which (as will be better explained hereinbelow) the light emitted from the device is omnidirectional, emulating incandescent lamps. The diffusor body 8 is hollow, inferiorly open and exhibits externally a flame shape. It is provided with walls which internally describe a chamber 9 housing the LED 2.

The diffusor body 8 is made of a light-transparent material, such as, for example, a polycarbonate. In any case, preferably the body 8 material is highly translucent (for example, more than 85%), low in opalescence (for example, less than 2%) and has a refraction index comprised between 1.4 and 1.6.

The LED 2 emits a light beam having a limited angular breadth and substantially upwards-directed (see figure 1), i.e. in a direction towards the wall superiorly delimiting the chamber 9 described by the diffusor body 8.

The chamber 9 is laterally delimited by a shiny circumferential surface 10 (very translucent) and superiorly delimited by a reflecting diffusor surface 11, is convex in shape, whitened, and able to reflect and diffuse the greater part of the light which hits it. The convex surface 11 is obtained, for example, through electron discharge machining, followed by a white painting operation. The whitened surface 11, arranged so as to be struck directly by the greater part of the light emitted by the LED 2, exhibits at its centre a small concave zone 12 which is not whitened but rather shiny, which zone 12 is struck by a part of the light emitted by the LED 2. The upper part (13) of the diffusor body 8, in which the abovementioned shiny concave zone 12 is afforded, is considerably thickened. The light hitting the concave zone 12 passes through the upper thickened part 13, refracting as it does so and expanding both upwards and radially. The part of the light beam emitted by the LED which strikes the diffusing surface 11 is then reflected by said surface 11 and diffused so as to expand both downwards and radially. The overall action of the diffusor body 8 is therefore to diffuse the light from the LED 2 (which arrives monodirectionally) all about.

In the example of figure 1, both the whitened convex surface 11 and the shiny concave zone 12 (which is smaller) are spherically cap-shaped, with their centres on the optical axis of the light source or LED 2. Experiments have shown that this conformation enables the light from the LED 2 to be diffused more or less uniformly, similarly to how a common light filament works. However, both the shape and sizes of the various elements making up the diffusor body 8, in particular the whitened convex body 11, the concave shiny zone 12 and the upper thickening 13, as well as the distance of these elements from the light source 2, can be different from the illustrated example, according to various parameters, such as for example the type and number of the light sources used, the type of light effect required, and so on.

Coupling to the lamp holder can be achieved in various ways, as the attachment itself can be made to correspond with the necessary type for the individual holder. The connection could be of the bayonet type, or the screw type (as in the illustrated embodiment), or whatever is needed.

The device of the invention is particularly useful for substituting low tension filament lamps used in cemetery or monument illumination.

The device is very compact, thanks in part to the fact that the majority of the printed circuit 3 (more than two-thirds) is housed in a hollow seating internal of the screw base 4.

## Claims

1. A low-tension lighting device, comprising:
at least one LED (2),
a control circuit (3) governing functioning of the LED (2),
a coupling element (4) which is connected to said control circuit (3) and by means of which said device is couplable to a lamp holder,
and a diffusor body (8), surrounding the LED (2), for diffusing the light emitted by it,
**characterised in that** the diffusor body (8) has a reflecting diffusing surface (11),a concave transparent zone (12) at the centre thereof and beyond said concave zone (12), a thickened portion (13) made of transparent material, which is passed through by the light which strikes said concave zone (12).

2. The device of claim 1, **characterised in that** the control circuit (3) is housed, at least partially, in a hollow seating afforded internally of the coupling element.

3. The device of claim 1, **characterised in that** said diffusing surface (11) is convex and is spherically cap-shaped.

4. The device of claim 1, **characterised in that** the transparent zone (12) is concave, and is spherically cap-shaped.

5. The device of claim 1, **characterised in that** said diffusor body (8) encloses a chamber (9), which chamber (9) is delimited by said diffusing surface (11) and said transparent zone (12), in which chamber (9) said LED (2) is housed.

6. The device of claim 1, **characterised in that** it comprises an annular element (7) interpositioned between the coupling element and the diffusor body (8) and **in that** it contains at least a part of the control circuit (3) oft he LED (2).

## Patentansprüche

1. Niederspannungs-Beleuchtungsvorrichtung mit:
mindestens einer LED-Diode (2),
einer die Funktion der LED-Diode (2) steuernden Steuerschaltung (3), einem mit der Steuerschaltung (3) verbundenen Kuppelelement (4), mit dem die Vorrichtung mit einem Lampenhalter kuppelbar ist,
und einem die LED-Diode (2) umgebenden Diffusorkörper (8) zur Diffusion des von der Diode emittierten Lichts,
**dadurch gekennzeichnet, dass** der Diffusorkörper (8) eine reflektierende Diffusionsfläche (11), an deren Zentrum eine konkave transparente Zone (12) und jenseits der konkaven Zone (12) einen aus transparentem Material bestehenden verdickten Teil (13), der das auf die konkave Zone (12) auftreffende Licht durchlässt, aufweist.

2. Vorrichtung nach Anspruch 1, **dadurch gekennzeichnet, dass** die Steuerschaltung (3) wenigstens zum Teil in einer im Inneren des Kuppelelements vorgesehenen hohlen Sitzkonstruktion untergebracht ist.

3. Vorrichtung nach Anspruch 1, **dadurch gekennzeichnet, dass** die Diffusionsfläche (11) konvex und sphärisch kappenförmig ist.

4. Vorrichtung nach Anspruch 1, **dadurch gekennzeichnet, dass** die transparente Zone (12) konkav und sphärisch kappenförmig ist.

5. Vorrichtung nach Anspruch 1, **dadurch gekennzeichnet, dass** der Diffusorkörper (8) eine von der Diffusionsfläche (11) und der transparenten Zone (12) begrenzte Kammer (9) umschließt, in der die LED-Diode (2) untergebracht ist.

6. Vorrichtung nach Anspruch 1, **dadurch gekennzeichnet, dass** sie ein ringförmiges Element (7) aufweist, das zwischen dem Kuppelelement und dem Diffusorkörper (8) angeordnet ist, und dass es mindestens einen Teil der Steuerschaltung (3) der LED-Diode (2) enthält.

## Revendications

1. Dispositif d'éclairage basse tension comprenant :
au moins une diode électroluminescente - LED - (2),
un circuit de commande (3) commandant le fonctionnement de la LED (2),
un élément de couplage (4) connecté au circuit de commande (3) et par lequel ledit dispositif peut être couplé à un support de lampe,
un corps diffuseur (8) entourant la LED (2) pour diffuser la lumière émise par celle-ci,
**caractérisé en ce que** le corps diffuseur (8) comprend une surface réflectrice diffusante (11), une zone transparente concave (12) au centre de celle-ci, et, au-delà de la zone concave (12), une partie épaissie (13) en matériau transparent qui est traversée par la lumière qui frappe la zone concave (12) .

2. Dispositif selon la revendication 1, **caractérisé en ce que** le circuit de commande (3) est logé au moins partiellement dans un siège creux prévu à l'intérieur de l'élément de couplage.

3. Dispositif selon la revendication 1, **caractérisé en ce que** la surface diffusante (11) est convexe et est en forme de capuchon sphérique.

4. Dispositif selon la revendication 1, **caractérisé en ce que** la zone transparente (12) est concave et est en forme de capuchon sphérique.

5. Dispositif selon la revendication 1, **caractérisé en ce que** le corps diffuseur (8) enferme une chambre (9), la chambre (9) étant délimitée par la surface diffusante (11) et la zone transparente (12), la LED (2) étant logée dans la chambre (9) .

6. Dispositif selon la revendication 1, **caractérisé en ce qu'**il comprend un élément annulaire (7) interposé entre l'élément de couplage et le corps diffuseur (8) et **en ce qu'**il contient au moins une partie du circuit de commande (3) de la LED (2).
